# EUROPEAN PATENT SPECIFICATION

(11) **EP 2 218 740 B1**
(45) Date of publication and mention of the grant of the patent: **06.11.2013**
(21) Application number: 10001192.3
(22) Date of filing: 05.02.2010
(51) Int. Cl.: C08G 18/08, C08G 18/62, C08G 18/79, C08G 18/80, C09D 175/04

(54) **Cleanable waterborne polyurethane coatings**
Reinigbare Polyurethanbeschichtungen auf Wasserbasis
Revêtements en polyuréthane à base d'eau et nettoyable

(30) Priority: 13.02.2009 US 152397 P
(43) Date of publication of application: 18.08.2010
(73) Proprietor: Bayer MaterialScience LLC, Pittsburgh, PA 15205 (US)
(72) Inventor: Allen, Kathy J., Scenery Hill, PA 15360 (US); Eastman, Jeanette J., Pittsburgh, PA 15205 (US); Best, Kurt E., Sewickley, PA 15143 (US)
(74) Representative: Klimiuk, Meike

(56) References cited:
- GB-A- 2 456 696
- US-A1- 2004 034 162
- US-A1- 2007 104 962

## Description

### BACKGROUND OF THE INVENTION

The invention relates to aqueous polyurethane dispersions exhibiting stain resistance despite having high surface energy.

Due to a high degree of abrasion and chemical resistance coupled with excellent color /UV stability, polyurethane topcoats are commonly used in the construction industry over functional floor coatings or as sealers for concrete.

The high performance properties are the result of using highly crosslinked polyurethane coatings which can be prepared from high-functional polyester resins or polyacrylate resins and aliphatic polyisocyanates. Typical applications include garage and hangar floors where resistance to brake fluid, skydrol and tire staining are needed. These performance attributes have also made highly crosslinked polyurethane coatings useful as graffiti resistant coatings, i.e. coatings that can be cleaned of graffiti paint with aggressive cleaners that will not destroy the original coating on the substrate.

Until now, these highly crosslinked polyurethane coatings have only been available in solvent-based formulations. Significant amounts of solvent classified as volatile organic compounds (VOCs) can contribute to air pollution and/or offensive odors.

For example, graffiti resistant coatings have been achieved through the use of low surface energy coating compositions. U.S. Patent Nos. 5,541,281, 5,574,122, 5,546,411, 5,646,227, 5,691,439 and 5,747,629, for example, disclose low surface energy compositions prepared from isocyanates and polyols, each potentially containing siloxane groups or fluorine. All of the compositions disclosed therein are solvent-borne compositions.

Documents US 2004/034162 A1 (example 1) and US 2007/104962 A1 (example 14) disclose waterborne polyurethane dispersions prepared from a CAPS-modified polyisocyanate and a hydroxy-functional acrylic dispersion.

### SUMMARY OF THE INVENTION

The present invention relates to a cleanable, waterborne polyurethane dispersion comprising the reaction product of:
A) at least two OH-functional acrylic dispersions and
B) one or more 3-(cyclohexylamino)-propane sulfonic acid-modified polyisocyanates.

### BRIEF DESCRIPTION OF THE DRAWINGS

Figure 1 represents a graph of the gloss as a function of blend ratio of hydroxyl functional resins.
Figure 2 represents the cleanability of formulation 2.
Figure 3 represents the cleanability of formulation 5.
Figure 4 represents an AFM scan of formulation 1.
Figure 5 represents an AFM scan of formulation 3.
Figure 6 represents an AFM scan of formulation 2.
Figure 7 represents an AFM scan of formulation 4.
Figure 8 represents an AFM scan of formulation 5.

### DETAILED DESCRIPTION OF THE PREFERRED EMBODIMENTS

As used herein and in the following claims, unless indicated otherwise, the term "molecular weight" shall be interpreted to mean number average molecular weight.

As used herein and in the following claims, the term "cleanable" used to describe a coating composition, means the composition passes the test for cleanablity set forth in ASTM-D6578.

As used herein and in the following claims, "(meth)acrylates" means the relevant acrylates and methacrylates.

Component A) comprises OH-functional, acrylic copolymer dispersions which are prepared by subjecting one or more vinyl monomer mixtures comprising
a) OH-free (meth)acrylic esters and/or vinylaromatics,
b) hydroxy-functional vinyl monomers or hydroxy-functional (meth)acrylic esters,
c) ionic and/or potentially ionic monomers capable of free-radical copolymerization, and
d) if desired further monomers, other than the compounds of components a) - c), capable of free-radical copolymerization
   to free-radical polymerization in the presence of
e) compounds of the formula (I) 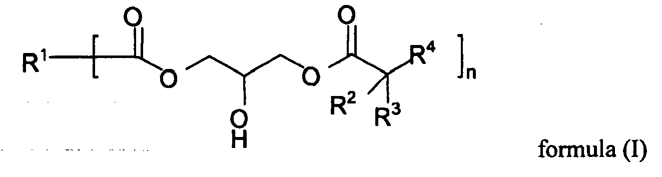
in which
- R¹: is an aliphatic, araliphatic or aromatic radical having 1 to 18 carbon atoms,
- R²: is H or CH₃,
- R³, R⁴: are identical or different aliphatc radicals having 1 to 7 carbon atoms and
- n: is 1 to 4,
and subsequently dispersing the resultant copolymer, before or after addition of a neutralizing agent, in water.

As monomers of component a) use is made of (meth)acrylateshaving 1 to 18 carbon atoms in the alcohol moiety of the ester group. This alcohol moiety may be linear aliphatic, branched aliphatic or cycloaliphatic.

Examples of suitable monomers of component a) include methyl, ethyl, n-propyl, n-butyl, isopropyl, isobutyl, t-butyl, the isomeric pentyl, hexyl, 2-ethylhexyl, octyl, dodecyl, hexadecyl, octadecyl or cyclohexyl, trimethylcyclohexyl and isobornyl (meth)acrylates.

In a) it is additionally possible to use acetoacetoxyethyl methacrylate, acrylamide, acrylonitrile, vinyl ethers, methacrylonitrile, vinyl acetates, optionally substituted styrenes, vinyltoluenes and mixtures thereof.

In component b) it is possible to use ethylenically unsaturated monomers containing OH groups, such as hydroxyalkyl esters of unsaturated carboxylic acids, for example, preferably hydroxyalkyl (meth)acrylates having 2 to 12, preferably 2 to 6, carbon atoms in the hydroxyalkyl radical.

Examples of such compounds are 2-hydroxyethyl (meth)acrylate, the isomeric hydroxypropyl (meth)acrylates, 2-, 3- and 4-hydroxybutyl (meth)acrylates and the isomeric hydroxyhexyl (meth)acrylates.

Likewise in b) it is possible to use polymerizable hydroxy-functional monomers chain-extended or modified with alkylene oxides and having a number-average molecular weight ≤ 3 000 g/mol, preferably ≤ 500 g/mol. Alkylene oxides employed for this purpose include preferably ethylene, propylene or butylene oxide, individually or in mixtures.

As ionic and/or potentially ionic monomers of component c), capable of free-radical copolymerization, it is possible to use olefinically unsaturated monomers containing carboxylic acid or carboxylic anhydride groups, such as acrylic acid, methacrylic acid, β-carboxyethyl acrylate, crotonic acid, fumaric acid, maleic anhydride, itaconic acid or monoalkyl esters of dibasic acids or anhydrides such as monoalkyl maleates, for example, preference being given to acrylic acid and/or methacrylic acid.

Also suitable as compounds of component c), additionally, are unsaturated, free-radically polymerizable compounds containing phosphate or phosphonate or sulphonic acid or sulphonate groups, as described for example in WO-A 00/39181 (p. 8 line 13 - p. 9 line 19), especially 2-acrylamido-2-methylpropanesulphonic acid.

Optionally it is also possible to use further monomers capable of free-radical copolymerization as compounds of component d). These may be, for example, (meth)acrylate monomers and/or vinyl monomers with a functionality of two or more, such as hexanediol di(meth)acrylate or divinylbenzene, for example. A further possibility is the addition of polymerizable compounds which have a non-ionically hydrophilicizing effect, such as acrylates of hydroxy-functional polyalkylene oxide ethers.

The proportions of the synthesis components a) to d) are typically chosen so as to give an OH number of from 12 to 200 mg KOH/g, preferably from 25 to 150 mg KOH/g and more preferably from 50 to 150 mg KOH/g solids and an acid number of from 0 to 50 mg KOH/g, preferably from 5 to 30, more preferably from 8 to 25 mg KOH/g solid.

Preferably, based on the copolymer, 50-85% by weight of component a), 15-40% by weight of component b), 0.5-5% by weight of component c) and 0-34.5% by weight of component d) are chosen so as to give copolymers which in terms of OH number and acid number conform to the above specifications.

Preference is given to using in e) compounds of the formula (I) where
- R¹: contains 2 to 6 carbon atoms and
- R³, R⁴: 1 to 7 carbon atoms
- R²: is H or CH₃ and
- n: is 1 to 4.

Particular preference is given to using in e) compounds of the formula (I) where
- R¹: contains 2 or 4 carbon atoms and
- R³, R⁴: 1 to 7 carbon atoms
- R²: is CH₃ and
- n: is 2.

Suitability as component e) is possessed, for example, by the reaction products of glycidyl esters of aliphatic carboxylic acids (e1)) with aliphatic, araliphatic or aromatic carboxylic acids (e2)).

Preferred compounds of component e1) for this case are glycidyl esters of Versatic acid, which are available for example as Cardura^{®} E10P from Resolution BV., Netherlands.

Preferred compounds of component e2) for this case are saturated aliphatic monocarboxylic acids such as acetic, propionic, butyric, pentanoic, hexanoic, heptanoic, octanoic, 2-ethylhexanoic, nonanoic, decanoic, lauric, myristic, palmitic, margaric, stearic, arachidic, behenic, lignoceric acid or unsaturated monocarboxylic acids such as oleic, linoleic, linolenic, ricinoleic acid or aromatic monocarboxylic acids such as benzoic acid, aliphatic dicarboxylic or polycarboxylic acids such as succinic, glutaric, adipic, pimelic, suberic, azelaic, sebacic, nonanedicarboxylic, decanedicarboxylic, dimer fatty acids, which are obtainable by dimerizing unsaturated monocarboxylic acids; aromatic dicarboxylic or polycarboxylic acids such as terephthalic, isophthalic, o-phthalic, tetrahydrophthalic, hexahyrophthalic or trimellitic acid, for example. It is of course also possible to use mixtures of the stated compounds in component e2).

Particular preference is given to the use of glycidyl esters of Versatic acid as e1) in combination with aliphatic monocarboxylic acids such as 2-ethylhexanoic, decanoic, lauric, myristic, palmitic, stearic, arachidic and behenic acid and unsaturated monocarboxylic acids such as oleic, linoleic, linolenic, ricinoleic acid and also dicarboxylic acids such as succinic and adipic acid or the isomeric pythalic acids as e2). With particular preference adipic acid is used in e2).

The compounds of component e) can be prepared from components e1) and e2) prior to or simultaneously with the free-radical polymerization of the unsaturated monomers a) to d).

The temperature is typically from 50 to 200°C, preferably 90 to 140°C. Preferably the compounds of component e) are prepared from e1) and e2) prior to the free-radical polymerization of the unsaturated components a) to d).

The amount of component e) in relation to the sum of the amounts of a) to e) is typically 5 to 60% by weight, preferably 10 to 30% by weight and more preferably 15 to 30% by weight.

Component B) includes modified polyisocyanates which are obtainable by reaction of polyisocyanates with 2 3-(cyclohexylamino)-propanesulfonic acid. These are dispersible in water after neutralization of at least a proportion of the sulfonic acid groups.

In particular, polyisocyanates with
a) an average isocyanate functionality of at least 1.8,
b) a content of isocyanate groups (calculated as NCO; molecular weight = 42) of 4.0 to 26.0 wt.%,
c) a content of sulfonate groups (calculated as SO₃⁻; molecular weight = 80) of 0.1 to 7.7 wt.% and optionally
d) a content of ethylene oxide units bonded within polyether chains (calculated as C₂H₂O; molecular weight = 44) of 0 to 19.5 wt.%, wherein the polyether chains contain a statistical average of 5 to 55 ethylene oxide units,
   which are obtainable by reaction of aliphatic, cycloaliphatic, araliphatic and/or aromatic polyisocyanates with 3-(cyclohexylamino)-propanesulfonic acid are suitable as component B).

In particular, the reaction is carried out by a procedure in which
1) a polyisocyanate component with an average functionality of 2.0 to 5.0 and a content of aliphatically, cycloaliphatically, araliphatically and/or aromatically bonded isocyanate groups (calculated as NCO; molecular weight = 42) of 8.0 to 27.0 wt.%
2) 0.3 to 25.0 wt.%, based on the total weight of components A) and B), of 3-(cyclohexylamino)-propanesulfonic acid and optionally
3) up to 25 wt.%, based on the total weight of components A), B) and C), of a monohydric polyalkylene oxide polyether alcohol containing a statistical average of 5 to 35 ethylene oxide units, in the presence of
4) 0.2 to 2.0 equivalents, based on the sulfonic acid groups of component B), of a tertiary amine
   are reacted with one another observing an equivalent ratio of NCO groups to groups which are reactive towards NCO groups of 2 : 1 to 400 : 1. The nature and ratio of amounts of the starting compounds mentioned are otherwise chosen here such that the resulting reaction products meet the conditions mentioned above under a) to d).

Component 1) has an average NCO functionality of 2.0 to 5.0, preferably 2.3 to 4.5, a content of isocyanate groups of 8.0 to 27.0 wt.%, preferably 14.0 to 24.0 wt.%, and a content of monomeric diisocyanates of less than 1 wt.%, preferably less than 0.5 wt.%. It comprises at least one organic polyisocyanate with aliphatically, cycloaliphatically, araliphatically and/or aromatically bonded isocyanate groups.

The polyisocyanates of component 1) are any desired polyisocyanates which are built up from at least two diisocyanates and are prepared by modification of simple aliphatic, cycloaliphatic, araliphatic and/or aromatic diisocyanates and have a uretdione, isocyanurate, allophanate, biuret, iminooxadiazinedione and/or oxadiazinetrione structure, such as are described by way of example, for example, in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299.

Suitable diisocyanates for the preparation of such polyisocyanates are any desired diisocyanates which are accessible by phosgenation or by phosgene-free processes, for example by thermal urethane cleavage. Preferred isocyanates are those of the molecular weight range of 140 to 400 with aliphatically, cycloaliphatically, araliphatically and/or aromatically bonded isocyanate groups, such as e.g. 1,4-diisocyanatobutane, 1,6-diisocyanatohexane (HDI), 2-methyl-1,5-diisocyanatopentane, 1,5-diisocyanato-2,2-dimethylpentane, 2,2,4- and 2,4,4-trimethyl-1,6-diisocyanatohexane, 1,10-diisocyanatodecane, 1,3- and 1,4-diisocyanatocyclohexane, 1,3- and 1,4-bis-(isocyanatomethyl)-cyclohexane, 1-isocyanato-3,3,5-trimethyl-5-isocyanatomethylcyclohexane (isophoronediisocyanate, IPDI), 4,4'-diisocyanatodicyclohexylmethane, 1-isocyanato-1-methyl-4(3)isocyanato-methylcyclohexane, bis-(isocyanatomethyl)-norbomane, 1,3- and 1,4-bis-(2-isocyanato-prop-2-yl)-benzene (TMXDI), 2,4- and 2,6-diisocyanatotoluene (TDI), 2,4'- and 4,4'-diisocyanatodiphenylmethane (MDI), 1,5-diisocyanatonaphthalene or any desired mixtures of such diisocyanates.

The starting components 1) are preferably polyisocyanates of the type mentioned with exclusively aliphatically and/or cycloaliphatically bonded isocyanate groups.

Very particularly preferred starting components 1) are polyisocyanates with an isocyanurate structure which are based on HDI, IPDI and/or 4,4'-diisocyanatodicyclohexylmethane.

In addition to these hydrophobic polyisocyanates, however, polyisocyanates which are modified hydrophilically with the aid of ethylene oxide polyethers and such as are obtainable, for example, by the processes described in EP-A 0 959 087, page 2, lines 25-46 are also suitable as starting compounds 1).

Component 2) is 3-(cyclohexylamino)-propanesulfonic acid (CAPS). This compounds is known, it is in crystalline form as zwitter-ionic substances, and has a melting points above 300°C. The preparation of CAPS is described, for example, in Bull. Soc. Chim. France 1985, 463 and in Z. Chem. 7, 151 (1967).

These aminosulfonic acids 2) are employed in the process according to the invention in amounts of 0.3 to 25 wt.%, preferably 0.5 to 25 wt.%, based on the total weight of components 1) and 2).

Components 3) which are optionally co-used are monohydric polyalkylene oxide polyether alcohols which contain a statistical average of 5 to 35, preferably 7 to 30 ethylene oxide units per molecule, such as are accessible in a manner known per se by alkoxylation of suitable starter molecules (see e.g. Ullmanns Encyclopädie der technischen Chemie, 4th edition, volume 19, Verlag Chemie, Weinheim p. 31 - 38).

As suitable starter molecules for the preparation of the polyether alcohols 3) employed in the process according to the invention there may be mentioned here by way of example: saturated monoalcohols, such as methanol, ethanol, n-propanol, isopropanol, n-butanol, isobutanol, sec-butanol, the isomeric pentanols, hexanols, octanols and nonanols, n-decanol, n-dodecanol, n-tetradecanol, n-hexadecanol, n-octadecanol, cyclohexanol, the isomeric methylcyclohexanols or hydroxymethylcyclohexane, 3-ethyl-3-hydroxymethyloxetane, or tetrahydrofurfuryl alcohol; unsaturated alcohols, such as allyl alcohol, 1,1-dimethyl-allyl alcohol or oleyl alcohol, aromatic alcohols such as phenol, the isomeric cresols or methoxyphenols, araliphatic alcohols, such as benzyl alcohol, anisyl alcohol or cinnamyl alcohol; secondary monoamines, such as dimethylamine, diethylamine, dipropylamine, diisopropylamine, di-n-butylamine, diisobutylamine, bis-(2-ethylhexyl)-amine, N-methyl- and N-ethylcyclohexylamine or dicyclohexylamine, and heterocyclic secondary amines, such as morpholine, pyrrolidine, piperidine or 1H-pyrazole.

Preferred starter molecules are saturated monoalcohols having up to 4 carbon atoms. Methanol is particularly preferably used as the starter molecule.

Alkylene oxides which are suitable for the alkoxylation reaction are, in particular, ethylene oxide and propylene oxide, which can be employed in the alkoxylation reaction in any desired sequence or also as a mixture.

The polyalkylene oxide polyether alcohols 3) are either pure polyethylene oxide polyethers or mixed polyalkylene oxide polyethers, the alkylene oxide units of which comprise ethylene oxide units to the extent of at least 30 mol%, preferably to the extent of at least 40 mol%.

Preferred starting components 3) are pure polyethylene glycol monomethyl ether alcohols which contain a statistical average of 7 to 30, very particularly preferably 7 to 25 ethylene oxide units.

The polyether alcohols 3) may be employed, if at all, in amounts of up to 25 wt.%, preferably up to 20 wt.%, based on the total weight of components 1), 2) and 3).

Tertiary amines 4) may be employed for neutralization of the sulfonic acid groups of starting components 2). These are, for example, tertiary monoamines, such as e.g. trimethylamine, triethylamine, tripropylamine, tributylamine, dimethylcyclohexylamine, N-methylmorpholine, N-ethylmorpholine, N-methylpiperidine or N-ethylpiperidine, or tertiary diamines, such as e.g. 1,3-bis-(dimethylamino)-propane, 1,4-bis-(dimethylamino)-butane or N,N'-dimethylpiperazine. However, tertiary amines which carry groups which are reactive towards isocyanates are also suitable, but less preferred, neutralization amines, for example alkanolamines, such as e.g. dimethylethanolamine, methyldiethanolamine or triethanolamine.

These neutralization amines 4) are employed in the process according to the invention in those amounts which correspond to an equivalent ratio of tertiary amino groups to sulfonic acid groups of component 2) of 0.2 to 2.0, preferably 0.5 to 1.5.

To prepare the polyisocyanates B), the starting components 1), 2) and optionally 3) are reacted with one another in the presence of a tertiary amine 4) at temperatures of 40 to 150°C, preferably 50 to 130°C, observing an equivalent ratio of NCO groups to groups which are reactive towards NCO groups of 2:1 to 400:1, preferably 4:1 to 250:1, preferably until the theoretically calculated NCO content is reached.

The presence of the tertiary amine 4) catalyses the reaction of components 1), 2) and optionally 3) sufficiently, but further conventional catalysts known from polyurethane chemistry can optionally be employed to accelerate the reaction in the process according to the invention, for example further tert. amines, such as triethylamine, pyridine, methylpyridine, benzyldimethylamine, N,N-endoethylenepiperazine, N-methylpiperidine, pentamethyldiethylenetriamine, N,N-dimethyl-aminocyclohexane or N,N'-dimethylpiperazine, or metal salts, such as iron(III) chloride, aluminium tri(ethyl-acetoacetate), zinc chloride, zinc(II) n-octanoate, zinc(II) 2-ethyl-1-hexanoate, zinc(II) 2-ethylcaproate, zinc(II) stearate, zinc(II) naphthenate, zinc(II) acetylacetonate, tin(II) n-octanoate, tin(II) 2-ethyl-1-hexanoate, tin(II) ethylcaproate, tin(II) laurate, tin(II) palmitate, dibutyltin(IV) oxide, dibutyltin(IV) dichloride, dibutyltin(IV) diacetate, dibutyltin(IV) dimaleate, dibutyltin(IV) dilaurate, dioctyltin(IV) diacetate or molybdenum glycollate, or any desired mixtures of such catalysts.

These catalysts are employed, if at all, in an amount of 0.001 to 2 wt.%, preferably 0.005 to 0.5 wt.%, based on the total weight of the reaction partners.

The preparation of component B) can optionally be carried out in a suitable solvent which is inert towards isocyanate groups. Suitable solvents are, for example, the conventional paint solvents which are known per se, such as e.g. ethyl acetate, butyl acetate, ethylene glycol monomethyl or -ethyl ether-acetate, 1-methoxyprop-2-yl acetate, 3-methoxy-n-butyl acetate, acetone, 2-butanone, 4-methyl-2-pentanone, cyclohexanone, toluene, xylene, chlorobenzene, white spirit, more highly substituted aromatics such as are commercially available, for example, under the names Solvent Naphtha, Solvesso^{®}, Isopar^{®}, Nappar^{®} (Deutsche EXXON CHEMICAL GmbH, Cologne, DE) and Shellsol^{®} (Deutsche Shell Chemie GmbH, Eschbom, DE), carbonic acid esters, such as dimethyl carbonate, diethyl carbonate, 1,2-ethylene carbonate and 1,2-propylene carbonate, lactones, such as β-propiolactone, γ-butyrolactone, ε-caprolactone and ε -methylcaprolactone, and also solvents such as propylene glycol diacetate, diethylene glycol dimethyl ether, dipropylene glycol dimethyl ether, diethylene glycol ethyl and butyl ether-acetate, N-methylpyrrolidone and N-methylcaprolactam, or any desired mixtures of such solvents.

The nature and ratios of amounts of the starting components are otherwise chosen, in the context of the statements made, such that the resulting polyisocyanates correspond to the statements made above under a) to d), wherein a) the average NCO functionality is preferably 2.0 to 4.8, particularly preferably 2.4 to 3.8, b) the NCO content is preferably 7.0 to 23.0 wt.%, particularly preferably 10.0 to 22.0 wt.%, c) the content of sulfonate groups (calculated as SO₃⁻; molecular weight = 80) is preferably 0.2 to 6.3 wt.%, particularly preferably 0.6 to 4.8 wt.%, and d) the content of ethylene oxide units bonded within polyether chains is preferably up to 17 wit.%, particularly preferably up to 15 wt.%.

The polyurethane dispersions according to the invention can be produced by preparing a first component comprising the OH-functional acrylate aqueous dispersion mixed with optional stabilizers and additives which are known in the art for use in aqueous polyurethane dispersions. The first component is then mixed with a second component which comprises the 3-(cyclohexylamino)-pronane sulfonic acid-modified polyisocyanate. The components are mixed at an equivalent ratio of NCO:OH of 1:5 to 5:1, more preferably, 1:3 to 3:1.

It will be appreciated by those skilled in the art that mixtures of different OH-functional acrylate aqueous dispersions may be utilized, as well as mixtures of different 3-(cyclohexylamino)-propane sulfonic acid-modified polyisocyanates, in order to achieve the desired properties.

### EXAMPLES

Products used in the Examples:
Desmophen^{®} 65 1A 65: saturated polyester polyol; OH content 5.2% by weight; equivalent weight 330.
Desmophen^{®} R 221 75: saturated polyester resin; OH content 3.3% by weight; equivalent weight 522.
Bayhydrol^{®} XP 2542: aqueous, hydroxy-functional acrylic resin available from Bayer Material Science LLC, Pittsburgh, PA; equivalent weight 630.
Bayhydrol^{®} XP 2546: anionic hydroxy-functional polyacrylic dispersion available from Bayer MaterialScience LLC, Pittsburgh, PA; equivalent weight 1000.
Bayhydrol^{®} A XP 2695: aqueous, hydroxy-functional polyacrylic dispersion; hydroxyl content 5% by weight; acid number 9.4 mg KOH/g.
Biuret N: Biuret-containing polyisocyanate based on HDI; NCO content 16.5% by weight; equivalent weight 255.
HDI Trimer 2: CAPS-modified biuret- and isocyanurate-group containing polyisocyanate based on HDI; NCO content 22.5% by weight; equivalent weight 82.
HDI Trimer 3: CAPS-modified biuret- and isocyanurate-group containing polyisocyanate based on HDI; NCO content 20.6% by weight; equivalent weight 204.

### Examples:

Using formulations in Table 1, combined 100 grams of component one with 58 grams of component two. All formulations were mixed at a ratio to produce an NCO:OH ratio of 3:1. Components were combined under agitation using a mechanical stir and an impeller blade for approximately 60 seconds. Next, the material was applied at 10 mils wet film thickness to 4x6 inch aluminium panels using a draw down bar. The panels were allowed to cure in a constant temperature of 72°F and 50% relative humidity for 14 days. The panels were then tested for anti-graffiti properties according to ASTM-D6578.

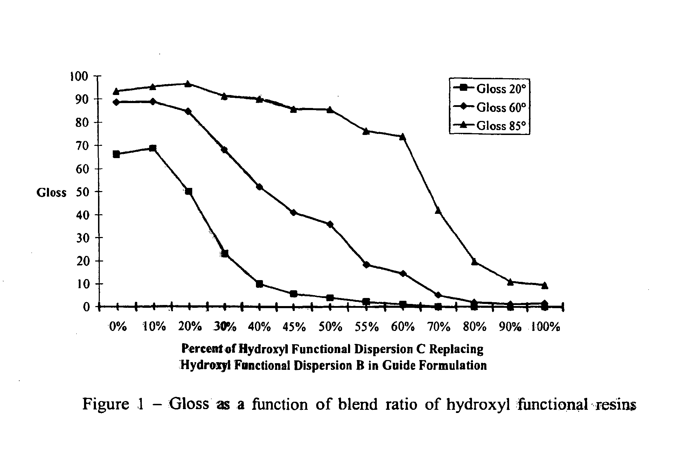

Formulations were prepared with four waterborne systems and a standard solvent borne system to explore differences in film properties. These five systems are described in Table 1. The gloss of these coatings can be controlled by varying the ratio of two hydroxyl functional resins as shown in Figure 1. An example of this is that formulation 3 represents the left most points on the graph while Formulation 2 is represented by samples on the right side with 60 degree gloss less than 10.

**Table 1 Formulations for Graffiti Resistant Coatings**

| | **Polyol** | **Isocyanate** | **VOC (g/L)** | **% Solids by Volume** | **Viscosity (cPs)** |
|---|---|---|---|---|---|
| **Formulation 1 (solvent-borne) (not inventive)** | Desmophen^{®} 65 1A 65 (90% by weight of Polyol) | Biuret N | 476 | 47.49 | 110 |
| | Desmophen^{®} R 22175 (10% by weight of Polyol) | | | | |
| **Formulation 2** | Bayhydrol^{®} XP 2542 (30% by weight of Polyol) | HDI Trimer 2 | 3.5 | 55.31 | 640 |
| | Bayhydrol^{®} XP 2546 (70% by weight of Polyol) | | | | |
| **Formulation 3 (not inventive)** | Bayhydrol^{®} XP 2542 | HDI Trimer 2 | 8.3 | 61.55 | 1250 |
| **Formulation 4 (not inventive)** | Bayhydrol^{®} A XP 2695 | HDI Trimer 2 | 97 | 55.28 | 1280 |
| **Formulation 5 (not inventive)** | Bayhydrol^{®} A XP 2695 | HDI Trimer 3 | 91 | 57.95 | 3180 |

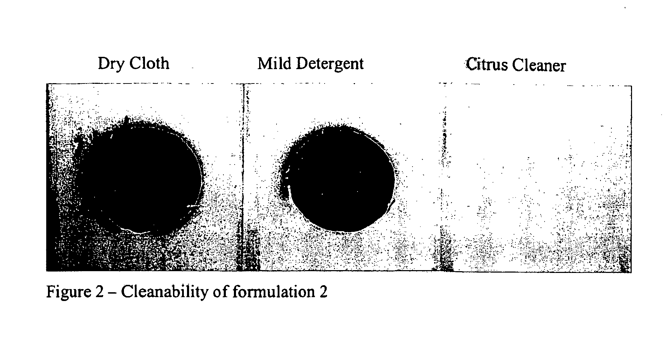

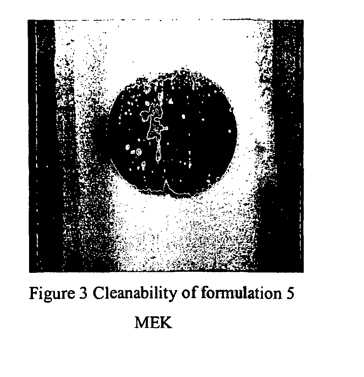

Formulation 1 and formulation 3 make glossy films and accordingly have good graffiti resistance. Formulation 2 has a matte finish but has surprisingly good graffiti resistance as seen in Figure 2. The epoxy graffiti paint was removed by a water-based citrus cleaner so no stronger solvents were needed. Formulations 4 and 5 have a matte finish but have poor graffiti resistance. The cleanability of Formulation 5 is shown in Figure 3; the epoxy graffiti paint could not be removed even with MEK which is the strongest solvent used for this test.

The three non-glossy films were tested for surface energy. Table 2 shows that the surface energy of the three systems is similar even though formulation 2 shows good graffiti resistance and the other two formulations show poor graffiti resistance. In fact Formulation 2 which shows the best graffiti resistance has the highest surface energy. This surprising result led us to examine the cause for good graffiti resistance in these films.

**Table 2 Surface Energy of two component polyurethanes**

| **Sample** | **Surface Energies (dynes/cm)** | | | **Θ_{water}** | **Θ_{MI}** | **Θ_{water}** |
|---|---|---|---|---|---|---|
| | **γₛ^{p}** | **γₛ^{d}** | **Total γₛ** | **advancing** | **advancing** | **receding** |
| **Formulation 2** | 11.0 | 20.1 | 31.1 | 77.0 (1.4) | 67.0 (1.8) | 42 |
| **Formulation 4** (not inventive) | 1.5 | 29.0 | 30.5 | 93.8 (1.3) | 56.8 (0.6) | 43 |
| **Formulation 5** (not inventive) | 2.0 | 21.8 | 23.8 | 97.3 (0.8) | 69.1 (1.7) | 47 |

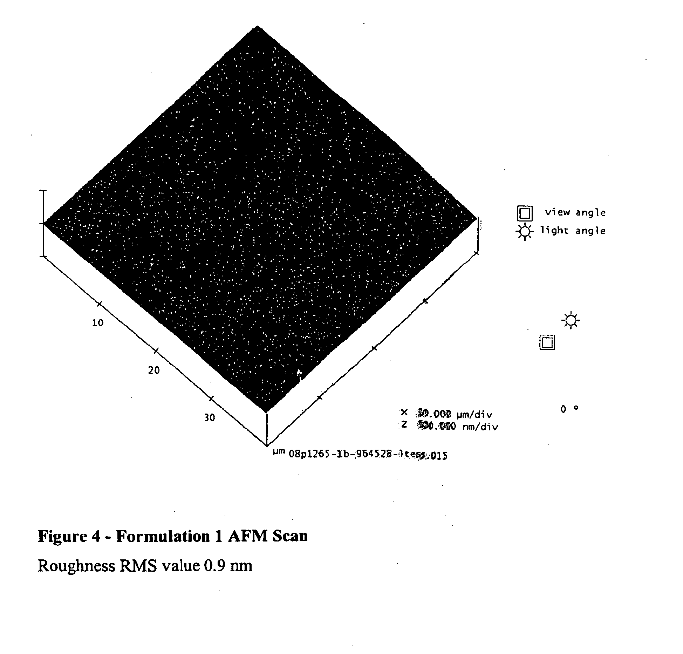

These five formulations were examined by atomic force microscopy (AFM) to study the surface morphology of each material. As you can see from the scans below Formulation 1 and Formulation 3 show smooth surfaces which is to be expected from glossy films. Formulation 1 is delivered from solvent which allows the two components to intermingle before being applied to the surface. This improves coalescence and results in a glossy film as seen in Figure 4.

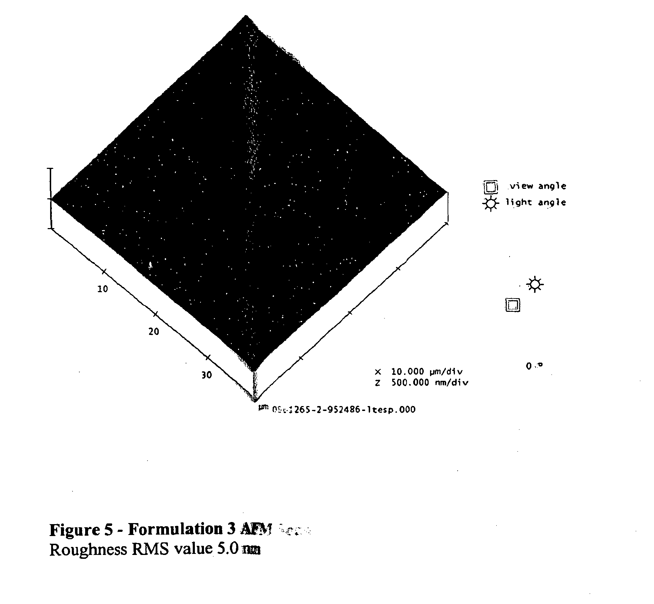

Formulation 3 gives a glossy and easily cleaned surface even though it is delivered from water. This is because it is a highly crosslinked two component urethane. It is able to coalesce well because the components are low in viscosity and sufficiently low in reactivity to give them the mobility that allows the polymer hard segments to align on the surface providing a glossy, cleanable surface. This surface is seen in Figure 5.

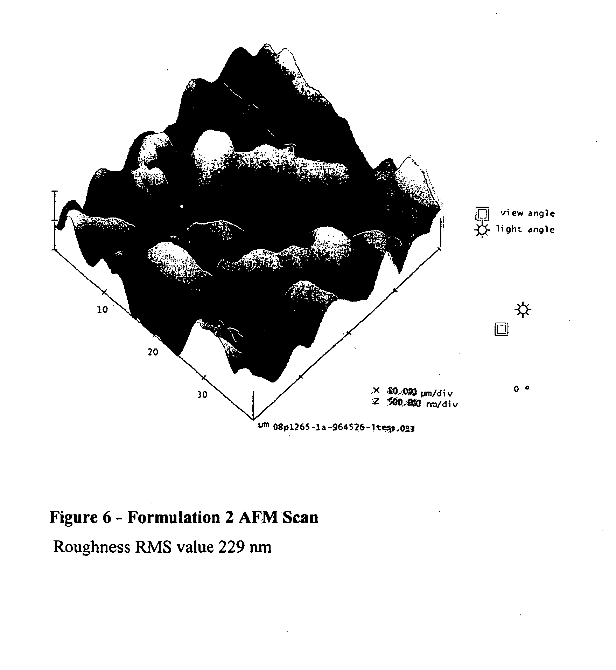

Formulation 2 (from Table 1) gives a matte finish coating that is easily cleaned. The AFM scan shows the surface is rough (Figure 6). This is to be expected in a matte finish film. The rough surface diffracts light in different directions so that it does not appear glossy. This AFM scan shows that the surface roughness is worse than Formulations 1 and 3.

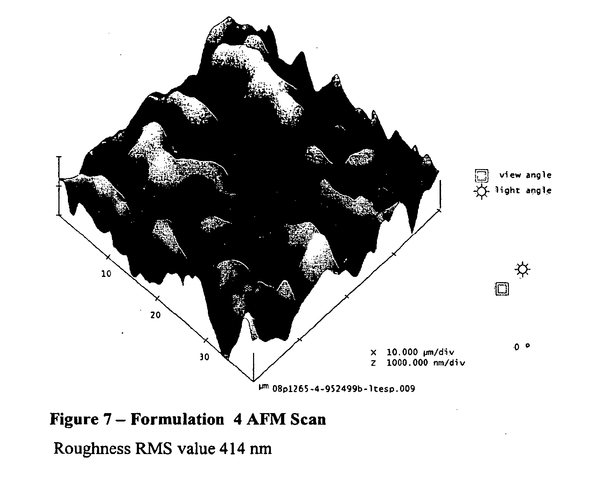

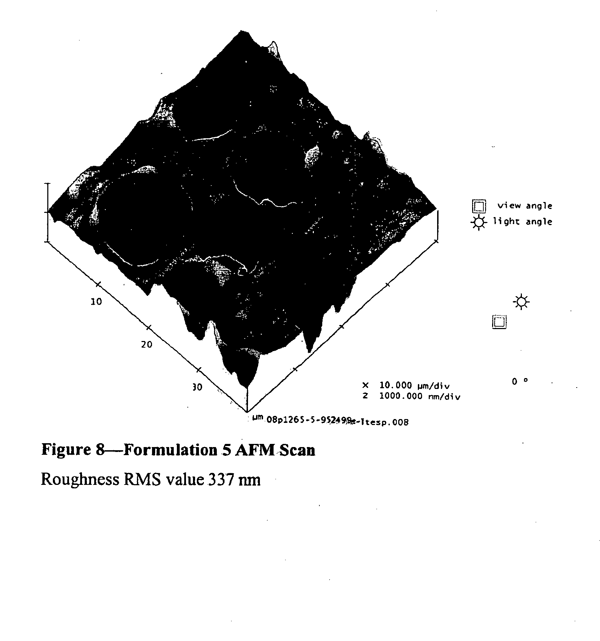

Formulations 4 and 5 (from Table 1) yielded matte finish coatings with the surface morphology shown in Figure 7 (for Formulation 4) and Figure 8 (for Formulation 5).

Of the five samples formulation 4 has the highest surface roughness and Formulation 5 has the second highest in addition to having more obvious surface imperfections. We theorize that this surface roughness allows subsequent paint layers (graffiti) to adhere well to the surface which makes it harder to be removed with cleaning. Formulation 2 has less surface roughness and contains no obvious pores that give anchor points to further paint layers. This may make Formulation 2 easier to clean.

A value that can be taken from the AFM study is the roughness value, expressed as root mean square ("RMS") roughness. RMS is a statistical parameter determined by the AFM software and is used as a measure of the extent of surface roughness of the samples. The RMS parameter measures deviation of the surface heights from a reference height, namely, the average height, as a function of the surface coordinates x and y. Table 5 shows the RMS value of each formulation.

**Table 5 - Roughness as measured by AFM**

| Formulation | Gloss | Graffiti Resistance | RMS (nm) |
|---|---|---|---|
| 1 (not inventive) | Glossy | Good | 0.9 |
| 2 | Matte | Good | 229.0 |
| 1 (not inventive) | Glossy | Good | 5.0 |
| 4 (not inventive) | Matte | Poor | 414.0 |
| 5 (not inventive) | Matte | Poor | 337.4 |

We believe that the difference in surface roughness is caused by the ability of each formulation to coalesce in an appropriate amount of time. The material has to go from being discreet particles to a continuous film as the water evaporates. In a two component system some of the initial particles contain both components, some particles are solely OH, and others are solely polyisocyanate. This variety of particles makes the coalescence more complicated. The coalescence process is competing with the reaction of polyisocyanate with hydroxyl functionality.

## Claims

1. A cleanable, waterbome polyurethane dispersion comprising the reaction product of:
A) at least two OH-functional acrylic dispersions and
B) one or more 3-(cyclohexylamino)-propane sulfonic acid-modified polyisocyanates.

2. The dispersion of claim 1, wherein component B) comprises at least one 3-(cyclohexylamino)-propane sulfonic acid-modified polyisocyanate based on an aliphatic diisocyanate.

3. The dispersion of claim 2, wherein the aliphatic diisocyanate is 1,6-diisocyanatohexane.

4. A method of producing a cleanable coating on a substrate comprising applying the dispersion of claim 1 to the substrate and curing the coating composition.

5. A coating produced according to the method of claim 4.

6. The coating of claim 5, wherein the surface energy of the coating is greater than 31.0 dynes/cm.

7. The coating of claim 6, wherein the surface roughness of the coating is greater than 200 nm.

8. The coating of claim 7, wherein the surface roughness of the coating is between 200 and 300 nm.

## Patentansprüche

1. Reinigbare, wässrige Polyurethandispersion, umfassend das Reaktionsprodukt von:
A) mindestens zwei OH-funktionellen Acrylatdispersionen und
B) einem oder mehreren 3-(Cyclohexylamino)propansulfonsäure-modifizierten Polyisocyanaten.

2. Dispersion nach Anspruch 1, wobei Komponente B) mindestens ein 3-(Cyclohexylamino)propansulfonsäure-modifiziertes Polyisocyanat auf Basis eines aliphatischen Diisocyanats umfasst.

3. Dispersion nach Anspruch 2, wobei es sich bei dem aliphatischen Diisocyanat um 1,6-Diisocyanatohexan handelt.

4. Verfahren zur Herstellung einer reinigbaren Beschichtung auf einem Substrat, bei dem man die Dispersion gemäß Anspruch 1 auf das Substrat aufbringt und die Beschichtungszusammensetzung härtet.

5. Beschichtung, hergestellt nach dem Verfahren gemäß Anspruch 4.

6. Beschichtung nach Anspruch 5, wobei die Oberflächenenergie der Beschichtung größer als 31,0 dyn/cm ist.

7. Beschichtung nach Anspruch 6, wobei die Oberflächenrauigkeit der Beschichtung größer als 200 nm ist.

8. Beschichtung nach Anspruch 7, wobei die Oberflächenrauigkeit der Beschichtung zwischen 200 und 300 nm liegt.

## Revendications

1. Dispersion de polyuréthane à base d'eau et nettoyable comprenant le produit de réaction de :
A) au moins deux dispersions d'acrylique à fonction OH, et
B) un ou plusieurs polyisocyanates modifiés par l'acide 3-(cyclohexylamino)propanesulfonique.

2. Dispersion selon la revendication 1, **caractérisée en ce que** le composant B) comprend au moins un polyisocyanate modifié par l'acide 3-(cyclohexylamino)propanesulfonique à base d'un diisocyanate aliphatique.

3. Dispersion selon la revendication 2, **caractérisée en ce que** le diisocyanate aliphatique est le 1,6-diisocyanatohexane.

4. Procédé de production d'un revêtement nettoyable sur un substrat comprenant l'application de la dispersion selon la revendication 1 sur le substrat et le durcissement de la composition de revêtement.

5. Revêtement produit selon le procédé de la revendication 4.

6. Revêtement selon la revendication 5, **caractérisé en ce que** l'énergie de surface du revêtement est supérieure à 31,0 dynes/cm.

7. Revêtement selon la revendication 6, **caractérisé en ce que** la rugosité de surface du revêtement est supérieure à 200 nm.

8. Revêtement selon la revendication 7, **caractérisé en ce que** la rugosité de surface du revêtement est comprise entre 200 et 300 nm.
